# EUROPEAN PATENT SPECIFICATION

(11) **EP 0 918 329 B1**
(45) Date of publication and mention of the grant of the patent: **14.04.2004**
(21) Application number: 96926592.5
(22) Date of filing: 08.08.1996
(51) Int. Cl.: G11B 23/03

(54) **MAGNETIC DISK CARTRIDGE**
MAGNETPLATTENKASSETTE
CARTOUCHE DE DISQUE MAGNETIQUE

(43) Date of publication of application: 26.05.1999
(73) Proprietor: FUJI PHOTO FILM CO., LTD., Kanagawa 250-01 (JP); IOMEGA CORPORATION, Roy, Utah 84067 (US)
(72) Inventor: OISHI, Kengo, Odawara-shi, Kanagawa-ken 250 (JP)
(74) Representative: Grünecker, Kinkeldey, Stockmair & Schwanhäusser Anwaltssozietät
(86) International application number: PCT/JP1996/002237
(87) International publication number: WO 1998/007153

(56) References cited:
- EP-A- 0 506 054
- EP-A- 0 690 445
- WO-A-96/12279
- DE-A- 2 741 974
- JP-U- 62 164 657
- US-A- 4 503 474

## Description

### TECHNICAL FIELD

The present invention relates to a magnetic disk cartridge, more particularly to a magnetic disk cartridge configured to ensure positional accuracy at the time of insertion into a magnetic recording and reproducing device.

### BACKGROUND ART

A magnetic disk cartridge comprises a magnetic disk for magnetically recording analog and/or digital signals rotatably encased in a thin cassette shell. The cassette shell is formed in the shape of a flat prism (substantially a hexahedron) with a top surface slightly larger than the magnetic disk, a bottom surface having an opening through which a center core supporting the center of the magnetic disk is exposed and narrow side surfaces extending between the outer peripheral edges of the top and bottom surfaces. The magnetic disk cartridge is provided with a magnetic head access opening for insertion/withdrawal of magnetic heads used for magnetic recording and reproducing so as to enable the magnetic heads to be brought into contact with, or close to, the opposite surfaces of the magnetic disk from the exterior. The magnetic head access opening is equipped with a shutter member for preventing invasion of dust and the like when the magnetic disk cartridge is not in use.

The magnetic head access opening of the prior art magnetic disk cartridge is a slender opening of substantially rectangular shape formed in the top and bottom surfaces of the cassette shell to extend in the radial direction of the magnetic disk.

However, it is not absolutely necessary for the magnetic head access opening to be formed in the top and bottom surfaces of the cassette shell to extend in the radial direction of the magnetic disk. Specifically, it can be provided at any location so long as it enables the magnetic heads to be brought in contact with, or close to, the opposite surfaces of the magnetic disk over the full radius thereof from the exterior. The opening is preferably as small as possible so as to minimize invasion of dust into the cartridge. The ability to fabricate smaller magnetic heads has afforded greater freedom in the positioning and sizing of the magnetic head access opening and has even made it possible to realize the desired small magnetic head access opening by providing the opening only in a side surface rather than in the top and/or bottom surface. This can be achieved by forming the narrow front side surface of the cassette shell with a magnetic head access opening of a size enabling access to the opposite surfaces of the magnetic disk from the exterior and inserting/withdrawing thin, arm-shaped pickups having tiny magnetic heads attached at their tips through this hole to conduct recording and reproduction while moving the pickups in the radial direction of the magnetic disk.

Such a magnetic disk cartridge having the magnetic head access opening formed in one side surface can accommodate a high-density, high-capacity magnetic disk. Since a high-density, high-capacity magnetic disk is used mainly in high-volume data processing applications such as for processing of large amounts of graphic or other such data or for backing up the internal hard disk of a computer, it requires a high recording density and a high data transfer rate. Like the conventional hard disk, therefore, it is required to conduct recording and reproducing while being rotated at high speed.

Recording and reproducing of data to the magnetic disk of this type of magnetic disk cartridge is conducted by inserting at least one pair of magnetic heads into the cartridge from the side so as to bring them near the opposite surfaces of the rapidly rotating magnetic disk. The side surfaces of the cassette shell of the magnetic disk cartridge are therefore made high enough to allow formation of a magnetic head access opening enabling insertion of the magnetic heads. This makes the thickness of the magnetic disk cartridge several times larger than that of the conventional thin magnetic disk cartridge.

On the other hand, the proliferation and wider use of personal computers has increased demand for more compact computers and, in turn, for more compact (especially thinner) magnetic disk drives. The disk drives of most conventional recording and reproducing devices first receive an inserted magnetic disk cartridge in a bucket section that covers at least the whole of the cartridge bottom surface and then sets it in the prescribed position. Since adopting the bucket system in a magnetic disk drive for a thick magnetic disk cartridge of the foregoing type increases the drive thickness, however, it is better from the viewpoint of achieving a more compact disk drive to adopt a structure for retaining and guiding the cartridge at the opposite lateral sides. Since the magnetic head access opening is formed in one side surface of the cassette shell, moreover, the magnetic disk cartridge has to be positioned with respect to the magnetic heads with a high degree of accuracy in the height direction. This further increases the advantage of adopting a structure for retaining and guiding the cartridge at the opposite sides.

However, the cassette shell of the ordinary magnetic disk cartridge is formed by joining upper and lower cassette shell halves by ultrasonic welding or the like and is therefore hard to fabricate to a precise thickness. This is because dimensional error is introduced twice, once at the time of cassette shell half molding and again when the cassette shell halves are joined by ultrasonic welding, and further because the welding is not conducted throughout but only partially. Securement of high dimensional accuracy is therefore troublesome from the aspect of production control and also costly.

EP 0506054A teaches the construction of an optical disk cartridge loaded on a disk recording and/or reproducing apparatus.

WO 9612279A shows a disk cartridge according to the preamble of claim 1.

The object of this invention is to overcome the aforesaid problems by providing a magnetic disk cartridge with enhanced dimensional accuracy in the vertical direction of a recording and reproducing device in which it is to be retained and guided at its opposite lateral sides.

### DISCLOSURE ON INVENTION

The invention provides a magnetic disk cartridge comprising a magnetic disk and a cassette shell formed by mating and joining an upper cassette shell half and a lower cassette shell half to encase the magnetic disk to be rotatable therein, the cassette shell being formed as a flat prism with a rectangular top surface slightly larger than the magnetic disk, a bottom surface of approximately the same shape as the top surface and lying parallel thereto and narrow side surfaces extending between the outer peripheral edges of the top and bottom surfaces, being formed in a front side surface with a magnetic head access opening for enabling magnetic recording and reproducing heads to be brought in contact with, or close to, opposite surfaces of the magnetic disk from the exterior, and having its upper cassette shell half or lower cassette shell half integrally formed on at least one lateral side with a sliding guide portion having an upper sliding surface and a lower sliding surface for making sliding contact with a rail-like insertion guide member provided at a lateral side of a recording and reproducing device to thereby guide and vertically position the magnetic disk cartridge.

Both lateral sides of the upper cassette shell half or the lower cassette shell half are preferably formed with sliding guide portions.

Since the invention provides the magnetic head access opening of the magnetic disk cartridge in one side surface of the cassette shell, the magnetic head access opening can be made small to minimize invasion of dust and the like into the interior of the cartridge. Moreover, since the sliding guide portions whose upper and lower sliding surfaces make sliding contact with the insertion guide members of the recording and reproducing device during magnetic disk cartridge insertion are integrally provided on either the upper cassette shell half or the lower cassette shell half, the accuracy of their height and parallelism depends solely on the molding precision and is not influenced by the accuracy with which the cassette shell halves are joined. Since the magnetic disk cartridge can therefore be fabricated with little error and consistent quality, it can be loaded in a recording and reproducing device with high positional accuracy in the vertical direction, thereby ensuring excellent recording and reproducing performance.

### BRIEF DESCRIPTION OF DRAWINGS

Figure 1 is a top perspective view of a magnetic disk cartridge which is an embodiment of the invention shown with its shutter member open and as positioned opposite insertion guide members of a recording and reproducing device,
Figure 2 is a bottom perspective view of the magnetic disk cartridge of Figure 1 shown with its shutter member closed.

### BEST MODE OF CARRYING OUT THE INVENTION

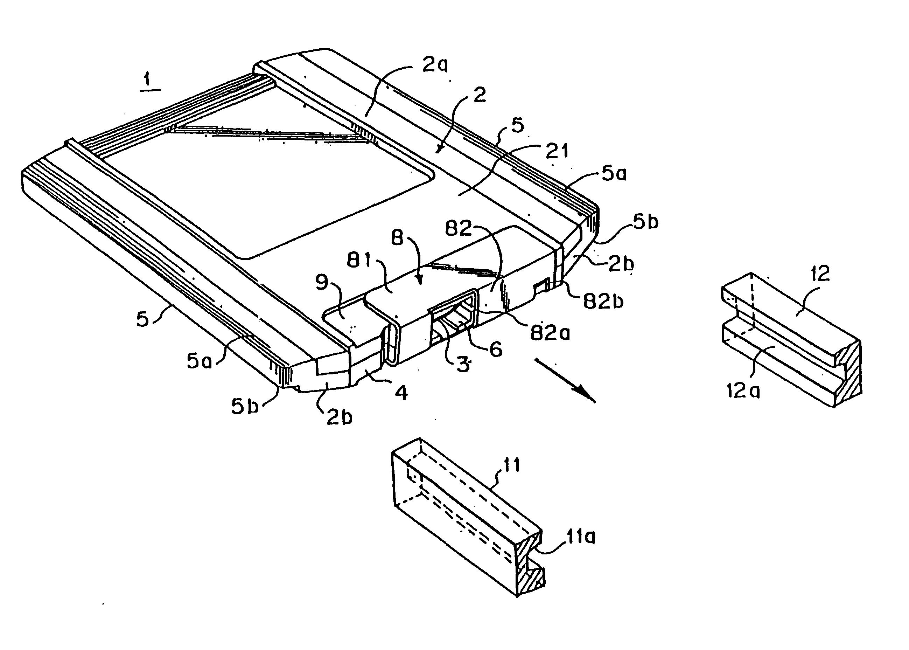

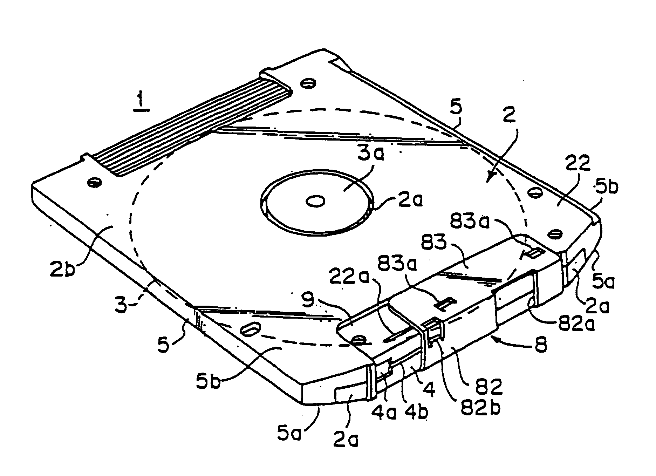

The magnetic disk cartridge of the present invention will hereinbelow be described with reference to the accompanying drawings. Figures 1 and 2 show a magnetic disk cartridge which is an embodiment of the invention. The magnetic disk cartridge is shown in perspective view from the top with its shutter member open in Figure 1 and from the bottom with its shutter member closed in Figure 2.

The magnetic disk cartridge of this embodiment, designated by reference numeral 1 in the drawings, comprises a cassette shell 2 encasing a magnetic disk 3 to be rotatable therein. The cassette shell 2 is formed by mating and joining of an upper cassette shell half 2a and a lower cassette shell half 2b, which are both made of molded plastic. The cassette shell 2 is formed as a flat hexahedron having an approximately square top surface 21 slightly larger than magnetic disk 3 encased therein, a bottom surface 22 of substantially the same shape as the top surface 21 and lying parallel thereto, and narrow side surfaces (including a front side surface 4) extending between the outer peripheral edges of the top surface 21 and the bottom surface 22.

The upper cassette shell half 2a is formed to a narrower width than the lower cassette shell half 2b and the lower cassette shell half 2b is integrally formed at its opposite lateral edges with sliding guide portions 5, 5 each having an upper sliding surface 5a and a lower sliding surface 5b. The top surface 21 of the upper cassette shell half 2a is contiguous to the inner edges of the upper sliding surfaces 5a, 5a on the opposite sides of the lower cassette shell half 2b. After being mated to encase the magnetic disk 3, the upper cassette shell half 2a and the lower cassette shell half 2b are joined at appropriate locations by ultrasonic welding or the like.

When the magnetic disk cartridge is loaded in a recording and reproducing device, the sliding guide portions 5, 5 of the cassette shell 2 are received and supported by a pair of rail-like insertion guide members 11, 12 extending inward from the front of the device at its lateral sides. The insertion guide members 11, 12 are formed along their lengths with grooves 11a, 12a. The upper sliding surfaces 5a, 5a and the lower sliding surfaces 5b, 5b make sliding contact with the grooves 11a, 12a, thereby defining the vertical position of the magnetic disk cartridge relative to the recording and reproducing device.

The center portion of the magnetic disk 3 (recording medium) is fixed to a center core 3a. The center core 3a faces into a circular opening 2a in the bottom surface 22 of the cassette shell 2 (see Figure 2). The center core 3a is adapted to be engaged by a spindle for rapidly rotating the magnetic disk 3.

A magnetic head access opening 6 enabling magnetic recording and reproducing heads to be brought in contact with, or close to, the opposite surfaces of the magnetic disk 3 from the exterior is formed in the front side surface 4 of the cassette shell 2. A slidable shutter member 8 for opening and closing the magnetic head access opening 6 is provided on the cassette shell 2. The shutter member 8 is constituted as a sectionally U-shaped sheet member comprising, as interconnected, an upper wing 81, a shutter section 82 and a lower wing 83 extending along associated surfaces of the cassette shell 2. The shutter section 82 is provided with a shutter window 82a for opening or closing the magnetic head access opening 6 depending on whether the magnetic disk cartridge is in use or storage. Portions of the cassette shell 2 adjacent to the magnetic head access opening 6 are formed with a shallow recess 9 for retaining and guiding the shutter member 8.

The shutter member 8 is constantly biased in the direction of closing the magnetic head access opening 6 by a shutter closing spring (a torsion spring not shown in the drawings). The shutter closing spring is inserted into the cassette shell 2 through a spring insertion opening 4a formed at one end portion of the front side surface 4 of the cassette shell 2, a first end portion thereof engages with a spring engaging portion 82b of the shutter section 82 of the shutter member 8, and the other end portion thereof engages with the inner surface of the cassette shell. The spring engaging portion 82b of the shutter member 8 passes through a slide groove 4b formed in the side surface 4 of the cassette shell 2. The lower wing 83 of the shutter member 8 is formed at two locations with projecting guide claws 83a, 83a that engage with a guide groove 22a formed in the bottom surface 22 of the cassette shell 2 to extend in the sliding direction of the shutter member 8, thereby retaining the shutter member 8 on the cassette shell 2.

The magnetic disk cartridge 1 of this embodiment is used in substantially the same manner as the prior-art magnetic disk cartridge. Specifically, it is inserted into the magnetic recording and reproducing device (hereinafter called simply "device") in the state shown in Figure 2, i.e. with the magnetic head access opening 6 closed by the shutter member 8, by sliding the sliding guide portions 5, 5 on its opposite lateral sides along the insertion guide members 11, 12. At this time, an operating member provided in the device responds to the loading operation by sliding the shutter member 8 to the open position shown in Figure 1. Then, when the operator performs a prescribed operation for removing the magnetic disk cartridge 1 from the device, for instance, when the operator presses a prescribed operating button of the device, the shutter member 8 is closed to the position shown in Figure 2. In Figure 1, the shutter member 8 is illustrated in the open position so as to better show the shape etc. of the magnetic head access opening 6. Actually, however, the shutter member 8 is closed as shown in Figure 2 when the magnetic disk cartridge 1 is positioned for insertion relative to the insertion guide members 11, 12 as shown in Figure 1.

While in the illustrated embodiment the upper sliding surface 5a and the lower sliding surface 5b of each sliding guide portion 5 are shown to be tapered, they can instead be formed as flat surfaces lying in parallel planes. Moreover, the sliding guide portions 5, 5 can be formed on the upper cassette shell half 2a rather than on the lower cassette shell half 2b as in the foregoing embodiment.

## Claims

1. A magnetic disk cartridge comprising:
a magnetic disk (3); and
a cassette shell (2) formed by mating and joining an upper cassette shell half (2a) and a lower cassette shell half (2b) to encase the magnetic disk (3) to be rotatable therein,
the cassette shell (2) being formed as a flat prism with a rectangular top surface (21) slightly larger than the magnetic disk (3), a bottom surface (22) of approximately the same shape as the top surface (21) and lying parallel thereto and narrow side surfaces extending between the outer peripheral edges of the top and bottom surfaces (21, 22), being formed in a front side surface (4) with a magnetic head access opening for enabling magnetic recording and reproducing heads to be brought in contact with, or close to, opposite surfaces of the magnetic disk (3) from the exterior; **characterized in that** said cassette shell has its upper cassette shell half (2a) or lower cassette shell half (26) integrally formed on at least one lateral side with a sliding guide portion (5) having an upper sliding surface (5a) and a lower sliding surface (5b) for making sliding contact with a rail-like insertion guide member (11, 12) provided at a lateral side of a recording and reproducing device to thereby guide and vertically position the magnetic disk cartridge.

2. A magnetic disk cartridge as defined in claim 1, wherein both sides of the upper cassette shell half (2a) or the lower cassette shell half (2b) are formed with sliding guide portions (5).

## Patentansprüche

1. Magnetplattenkassette, die aufweist:
eine magnetische Platte (3); und
eine Kassettenhülle (2), gebildet durch Anpassen und Verbinden einer oberen Kassettenhüllenhälfte (2a) und einer unteren Kassettenhüllenhälfte (2b), um die Magnetplatte (3) so einzuhüllen, dass sie darin drehbar ist,
wobei die Kassettenhülle (2) als ein flaches Prisma mit einer rechtwinkligen, oberen Fläche (21) leicht größer als die Magnetplatte (3), einer Bodenfläche (22) von ungefähr derselben Form wie die obere Fläche (21) und parallel dazu liegend, und schmalen Seitenflächen, die sich zwischen den äußeren Umfangskanten der oberen und unteren Fläche (21, 22) erstrecken, ausgebildet ist, wobei in der vorderen Seitenfläche (4) eine Magnetkopf-Zugangsöffnung ausgebildet ist, um zu ermöglichen, dass magnetische Aufzeichnungs- und Wiedergabeköpfe in Kontakt mit, oder nahe Zu, gegenüberliegenden Flächen der Magnetplatte (3) von der Außenseite aus gebracht werden;
**dadurch gekennzeichnet, dass** die Kassettenhülle ihre obere Kassettenhüllenhälfte (2a) oder untere Kassettenhüllenhälfte (2b) integral an zumindest einer lateralen Seite mit einem Gleitführungsbereich (5) ausgebildet besitzt, der eine obere Gleitfläche (5a) und eine untere Gleitfläche (5b) besitzt, um einen gleitenden Kontakt mit einem schienenähnlichen Einsetzführungselement (11,12), vorgesehen an einer lateralen Seite einer Aufzeichnungs- und Wiedergabevorrichtung, herzustellen, um dadurch die Magnetplattenkassette zu führen und vertikal zu positionieren.

2. Magnetplattenkassette nach Anspruch 1, wobei beide Seiten der oberen Kassettenhüllenhälfte (2a) oder der unteren Kassettenhüllenhälfte (2b) mit Gleitführungsbereichen (5) ausgebildet sind.

## Revendications

1. Cartouche de disque magnétique comportant :
un disque magnétique (3); et
un boîtier de cassette (2) formé en réunissant et en reliant une moitié de boîtier de cassette supérieure (2a) et une moitié de boîtier de cassette inférieure (2b) afin d'enfermer le disque magnétique (3) de façon à pouvoir tourner dedans,
le boîtier de cassette (2) étant sous la forme d'un prisme plat avec une surface supérieure rectangulaire (21) légèrement plus grande que le disque magnétique (3), une surface inférieure (22) approximativement de la même forme que la surface supérieure (21) et s'étendant parallèlement à celle-ci et des surfaces latérales étroites s'étendant entre les bords périphériques extérieurs des surfaces supérieure et inférieure (21, 22), étant formé dans une surface du côté avant (4) avec une ouverture d'accès de tête magnétique afin de permettre à des têtes d'enregistrement et de reproduction magnétiques d'être amenées en contact avec ou près des surfaces opposées du disque magnétique (3) depuis l'extérieur; **caractérisée en ce que** ledit boîtier de cassette a sa moitié de boîtier de cassette supérieure (2a) ou sa moitié de boîtier de cassette inférieure (2b) formée intégralement sur au moins un côté latéral avec une partie de guidage de coulissement (5) ayant une surface de coulissement supérieure (5a) et une surface de coulissement inférieure (5b) afin de réaliser un contact de coulissement avec un élément de guidage d'insertion en forme de rail (11, 12) prévu au niveau d'un côté latéral d'un dispositif d'enregistrement et de reproduction de façon à guider et positionner verticalement la cartouche de disque magnétique.

2. Cartouche de disque magnétique selon la revendication 1, dans laquelle les deux côtés de la moitié de boîtier de cassette supérieure (2a) ou de la moitié de boîtier de cassette inférieure (2b) sont formés avec des parties de guidage de coulissement (5).
